# EUROPEAN PATENT SPECIFICATION

(11) **EP 0 865 597 B1**
(45) Date of publication and mention of the grant of the patent: **27.06.2001**
(21) Application number: 96940160.3
(22) Date of filing: 04.12.1996
(51) Int. Cl.: F28D 7/10, A23G 3/04

(54) **Continuous-flow heat exchanger**
Wärmetauscher mit kontinuierlichem Durchfluss
Echangeur à chaleur à débit continu

(30) Priority: 06.12.1995 NL 1001834
(43) Date of publication of application: 23.09.1998
(73) Proprietor: Indupal B.V., 2982 CM Ridderkerk (NL)
(72) Inventor: TWILT, Adrianus, Hendrikus, NL-3314 JA Dordrecht (NL); OOMS, Albert, NL-2923 EB Krimpen a/d Ijssel (NL)
(74) Representative: Bakkum, Ruben Joseph
(86) International application number: NL9600475
(87) International publication number: WO9721061

(56) References cited:
- EP-A- 0 343 748
- DE-A- 2 311 563
- DE-B- 1 054 099
- NL-A- 8 004 240

## Description

The present invention relates to an apparatus for exchanging heat, in a flow process, between an at least in part liquid first medium to be treated and a liquid or gaseous second medium, comprising a plurality of cooperating assemblies each comprising a central tube, provided with one or more static mixing elements, an annular space surrounding said tube and a shell tube which delimits the annular surrounding space, at least the annular spaces communicating with one another in such a way that an essentially continuous annular compartment is formed and the central tubes likewise being connected to one another in such a way that an essentially continuous central compartment is formed, in which, during operation, the first medium is flowing, the second medium flowing through the annular compartment.

In many preparative operations in the field of, for example, the food industry such as the sugar-processing industry and the dairy industry, in the field of manufacturing pharmaceutical products, of the cosmetic industry and chemistry, heat exchangers are employed, which are optionally connected to an evaporator system and/or other processing systems.

An apparatus of the abovementioned type is disclosed by DE-A-23 11 563. In this apparatus, at the start of each straight central tube, so-called reversing elements are positioned which are constructed as an oblique hollow cone tip, whose base is in each case fitted, by means of a flange, to the rim of the central tube.

Media to be cooled or to be heated are, each time they flow through a straight central tube, "reversed" once, which means that the medium located near the wall of the tube is directed to the centre thereof, which is associated with a turbulent flow character, according to this publication, said flow character at the other end of the tube being laminar once more, as stated by said publication.

Viscous media which are processed, for example, in the food industry, as already mentioned above, in such an apparatus will very soon after the reversing element have reverted to a laminar flow character. This laminar flow character is an undesirable feature, since the medium located near the wall is not or virtually not flowing and therefore is in contact with the wall for a long time. The heat exchange is therefore inhomogeneous, with respect to the medium, and the medium located at the wall may become undercooled or overheated, or even char, which is a problem, for example, in the manufacture of caramel. To avoid this problem, the thermal difference between the two media must not be too large, which again implies a relatively long cooling/heating section. This latter feature has the drawback that the apparatuses are relatively large, occupy a great deal of space, require a great deal of energy etc.

An additional drawback with the said apparatuses is the fact that owing to, for example, static mixing elements employed there are often "dead" spaces in the central tubes. In the apparatus according to the DE-A-23 11 563 this is the case, for example, in the region around the shell of the cone base of the reversing element, between this element and the tube wall. In these dead spaces the medium does not or virtually does not flow. In such dead spaces it is possible, if the medium to be processed is, for example, a sugar solution, for bacterial growth and the like to occur, which is highly undesirable and may render the product unusable.

The object of the present invention is to solve and overcome, respectively, the abovementioned problems and drawbacks by providing an apparatus of the type mentioned in the preamble, which is of compact design, that is to say that its tube length is limited, and the residence time of the medium to be treated at the wall of the central tubes is short, and which is essentially free from dead spaces, being characterized in that the central tubes are essentially completely filled with the static mixing elements, the mixing elements being positioned in such a way in the central compartment that they are in contact with the wall of the central tube, the one or more static mixing elements comprise at least partly blade-shaped components contacting the inner wall of a central tube and which slope in the flow direction of the first medium.

As a result of the apparatus comprising such static mixers within the central tubes, the medium, during operation, will be moved away from the wall at each blade-shaped component. As the central tubes are essentially completely filled with the static mixing elements, the residence time at the wall of the medium to be treated is depending on the flow velocity of the medium, its viscosity and the number of blade-shaped components present, reduced by quite a considerable amount. As a result of the medium to be treated in this apparatus, during operation, flowing continuously through the central compartment which does not contain any dead spaces, growth of microorganisms will essentially not take place.

The static mixing elements are positioned in such a way in the central compartment that they are in contact with the walls of the central tubes. During operation, the mixers will then themselves also conduct heat which is supplied or removed via the central tube wall. The heat exchange area is thus increased, as a result of which the heat exchange section of the apparatus can be shortened, or it is possible to opt for a smaller thermal difference between the two media or for a combination thereof.

Owing to the expedient static mixing elements positioned in the tubular cavity within a central tube, and owing to the simple construction of abovementioned assemblies joined to one another, the apparatus according to the present invention is readily maintained, cleaned and operated. Cleaning can take place, for example, in situ by means of a cleaning fluid being pumped through the apparatus; owing to the absence of dead spaces, the cleaning fluid will not remain behind in the apparatus and will be able to be removed by means of relatively little rinse water.

Preferably, the static mixing elements in the apparatus according to the present invention are positioned so as to be detachable, in order to facilitate inspection and maintenance of the apparatus.

The static mixers, which comprise the blade-shaped components in a criss-cross fashion, the blade-shaped components of the mixing elements being disposed in at least two groups and the blade-shaped components within one group being essentially parallel, whereas the blade-shaped components of the one group cross the blade-shaped components of the other group, proved to be usable in the apparatus to great advantage. Using this type of static mixing elements makes it possible for the medium to be treated to be caused to flow as a laminar flow having a turbulent character, as a result of which optimum heat transfer will take place. Owing to such a flow the velocity of the first medium at the central tube wall will not be zero; the first medium will, as previously described above, constantly be guided away from the wall, charring or burning of the first medium thus being prevented. The apparatus may be designed so as to be considerably shorter compared with prior art apparatuses, which entails considerable savings in cost and weight.

For use in, for example, the sugar-processing, confectionery and dairy industry, mixing elements commercially available from Sulzer in Switzerland as type SMX and described in the Dutch Patent Application NL-A-8004240 can expediently be employed as static mixing elements in the apparatus according to the present invention, even though said mixing elements have been developed for mixing two liquids having extreme viscosity ratios (of 1: 1000 or more) and are indeed only being used as such in the art.

These mixing devices have the following characteristics:
- the ratio between the maximum width of the blade-shaped components and the tube diameter is 0.1-0.167,
- the ratio between the perpendicular blade-shaped components spacing in each group and the tube diameter is 0.2-0.4, and
- the ratio between the length of a mixing element and the tube diameter is 0.75-1.5.

If these mixing elements are positioned under a certain pressure in the central tubes, the blade-shaped components thereof will make contact with the central tube wall, as a result of which, as previously indicated hereinabove, the surface across which the heat transfer takes place is virtually doubled, compared with a tube without mixing elements.

A very attractive preferred embodiment of the apparatus according to the present application therefore contains static mixing elements of the abovementioned type SMX.

Static mixing elements of the type SMXL are recommended by the manufacturer for the exchange of heat. These, however, are somewhat less effective because they contact the wall of the central tube to a much lesser extent and consequently fouling may take place on the wall and undercooling/overheating (charring) may occur. The poor contact between the mixing elements and the wall also means that the above-described heat exchange via the mixing element cannot take place as effectively.

The blade-shaped components of the mixing devices of the Sulzer SMXL type are also at a smaller angle with respect to the tube wall, as a result of which, as is obvious to those skilled in the art, a lower pressure head drop will admittedly occur, but less heat transfer can take place per unit of tube length, so that the length of the heat exchange section in the apparatus is larger than if the mixing elements of the SMX type are used, which is undesirable if as compact as possible an apparatus is being aimed for. Given the above, the static mixing elements of the SMXL type are therefore less suitable in the apparatus according to the present application.

Other static mixing devices can likewise be used in the apparatus according to the present invention, as long as they satisfy the above-described requirements.

For cleaning and inspection purposes mixing elements, if more than two mixing elements are used for each straight central tube, are preferably connected in series with one another by means of, for example, soldered or cemented joints, preferably having a length of about half a tube length. In each straight central tube, two such series can then be accommodated which can be pushed into/out of the central tubes in a simple manner.

Preferably, at least one of the connection means which connect the central tubes to one another is provided with one or more sealable orifices for adding constituents to the first medium. These can be used, for example, in the sugar-processing industry for admixing the first medium with colourings and flavourings.

To keep the heat loss as low as possible, and also for safety reasons, a preferred embodiment of the apparatus according to the present invention is accommodated, at least in part, within a thermally insulating housing. A suitable insulation material is, for example, perlite; other insulating materials such as thermally stable organic foams are likewise suitable.

The present invention also relates to the above-described apparatus for exchanging heat, in which the central compartment for the first medium on the downstream side is connected to an evaporator system. For many industrial purposes, solutions are first heated and then subjected to evaporation, the sugar-containing solution being treated in such a manner in the sugar-processing industry, for example.

Preferably, the evaporator system includes an underpressure chamber which makes it possible for evaporation of the solution to take place under controlled conditions, in contrast to an evaporator system in which the vapour outlet is in direct contact with the atmosphere, such systems being used, for example, in the sugar-processing industry. With such known evaporator systems the atmospheric conditions are an important factor which cannot be influenced, evaporation therefore not being able to take place under controlled conditions, while product-containing vapour reaches the atmosphere, which may involve pollution of the environment.

Preferably, the evaporator system which may form part of the apparatus according to the invention contains, in the underpressure chamber, a plate across which the medium can flow, so that the solution is spread out in this chamber to increase the surface area of the solution to be evaporated and allowing evaporation to proceed more effectively. Preferably, this plate is positioned at an angle with respect to the horizontal flow component of the medium to be evaporated, so that the liquid is able to move across the plate under the influence of gravity. Preferably, the plate is of corrugated design, in order to accomplish a certain degree of movement within the medium to be evaporated, the efficiency of the evaporation process being increased further as a result.

Preferably, the reduced pressure in the evaporator system is accomplished, at least primarily, by an ejector. The advantage of using an ejector compared with, for example, a water ring vacuum pump consists in the fact that warm vapour can be absorbed in the seal water of the water ring pump, the pump performance decreasing as a result. Dry vacuum pumps have the drawback that no moisture, in the form of water or of solution to be evaporated, must get into the pump, which requires expensive measures known in the art, such as fitting a condenser, a water separator and a filter. Moreover it is absolutely undesirable for the solution to be evaporated to come into contact in any way with lubricants which are used in such pumps. An ejector is devoid of said drawbacks. Moreover, an ejector does not contain moving parts, implicating limited wear and maintenace.

Advantageously, the ejector of the evaporator system is a water-jet ejector, so that in the case of an aqueous first medium the abstracted vapour is absorbed into the water jet.

In a preferred embodiment of the present invention, the ejector of the evaporator system is incorporated in a water circulation system, so that the ejector consumes virtually no water.

In a following preferred embodiment, the evaporator system is connected in such a way to one or more processing systems that the water from the evaporator system can be delivered to said systems. Thus, during operation, the water flowing through the ejector will, by absorbing vapour from the aqueous solution to be evaporated, be heated; this heated water can be fed to another processing system, so that it is not necessary for water to be heated separately for the latter system. This permits considerable savings in energy.

In yet another preferred embodiment it is possible, between the apparatus for exchanging heat and the evaporator system, for one or more systems to be connected for carrying out operations, such as a system for applying a supplementary heat treatment, mixing, dilution and the like to the first medium.

In yet a further preferred embodiment, the evaporator system is followed by a supplementary apparatus for exchanging heat, which latter apparatus for exchanging heat is preferably of the type as described hereinabove according to the invention; the medium subjected to evaporation can, upon leaving the evaporator system, be heated further or be cooled in this manner. Advantageously, the apparatus incorporates, between the evaporator system and the supplementary apparatus for exchanging heat, one or more systems for carrying out operations on the first medium, such as a system for applying a supplementary heat treatment, mixing, dilution and the like.

By virtue of incorporating, in a preferred embodiment of the present invention, an evaporator system as described above without moving parts, the system is virtually maintenance free, which has a cost-saving effect.

In a following preferred embodiment of the invention, the evaporator system is connected to one or more processing systems in such a way that the water from the evaporator system can be delivered to said systems. Thus, during operation, the water flowing through the ejector will, by absorbing vapour from the aqueous solution to be evaporated, be heated; this heated water can, for example, in part be fed to another processing system, so that it is not necessary for water to be heated separately for the latter system. This permits considerable savings in energy.

Further reference is made to EP-A-0 343 748 wherein a device for heating a mixture of substances is described. In the device, a mixture of components is passed through a plurality of pipelengths, being arranged within a common housing wherein steam or the like is fed. The heat exchange takes place in a crossflow fashion. In order to mix different substances, static mixers are provided in one or more of the pipelengths.

A system for heating sugar solutions is also known from EP-A-0 611 588. This describes a heat exchanger for heating a sugar solution which flows through a surrounding annular space. The inside of the annular space is defined by a central tube through which the heat-delivering medium, steam, is flowing. The outside of the surrounding annular space is defined by a tube wall which may or may not be encompassed by a second annular space, through which likewise heat-delivering medium can flow. The annular space contains small baffles which are fixed to the outer wall of the central tube and serve as static mixers which cause turbulence within the sugar solution to be heated, as a result of which heat transfer is alleged to be promoted. As a result of the solution possibly being heated from two sides in said apparatus, the heating surface can be doubled; nevertheless this apparatus has drawbacks: 1) because the central heating tubes are run to the outside, whereas the surrounding space, by means of a U-bend, is connected through to a following surrounding space, dead spaces are formed in the compartment for the solution to be heated, which may lead, in the case of, for example, a sugar solution being heated, to growth of microorganisms; 2) the apparatus is complicated in design and consequently expensive; replacing a central tube and the tube which delimits the annular space outwardly is laborious, and because of the many seals the risk of leaks which may arise during maintenance and/or replacement is high; 3) it is difficult to position effective static mixing elements in the annular space; the small baffles which, according to EP-A-0 611 588, are fixed to the outside of the central tube are relatively primitive mixers and do not meet the requirements of good mixing and heat distribution.

The apparatus and how it operates is explained in more detail with reference to the accompanying drawing.

Figure 1 is a simplified schematic representation of a heat exchanger according to the invention,

Figure 2 gives a more detailed schematic representation of a preferred embodiment of a heat exchanger according to the present invention.

Figure 3 is a schematic representation of a cross-section of a preferred embodiment of an evaporator system for use in the present invention.

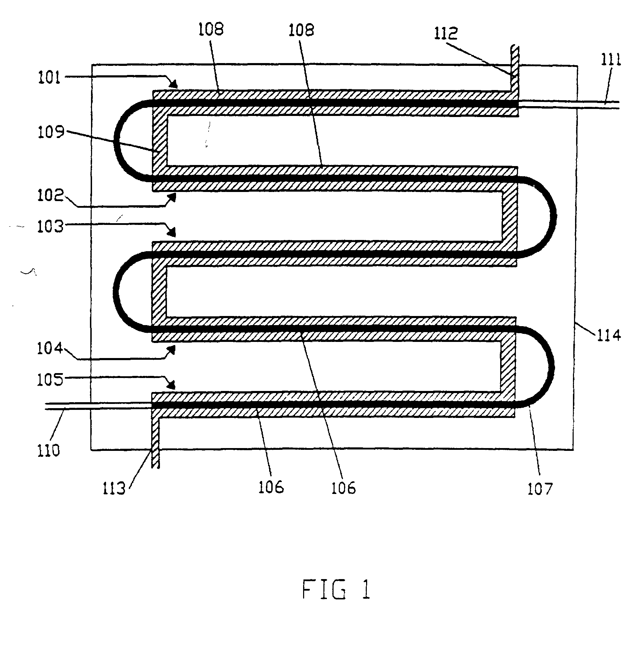

In Figure 1, 5 assemblies 101-105 positioned in parallel are indicated by arrows. Central tubes 106 which are connected to one another by means of U-bends 107 form a continuous central compartment (thick black line). Shell tubes are represented by 108 and are likewise connected to one another by means of connections 109, an annular compartment (hashed) being formed as a result. The central compartment has an in- and outlet 110, 111, and the in- and outlet of the annular compartment are represented by 112 and 113. The whole is accommodated in a housing 114.

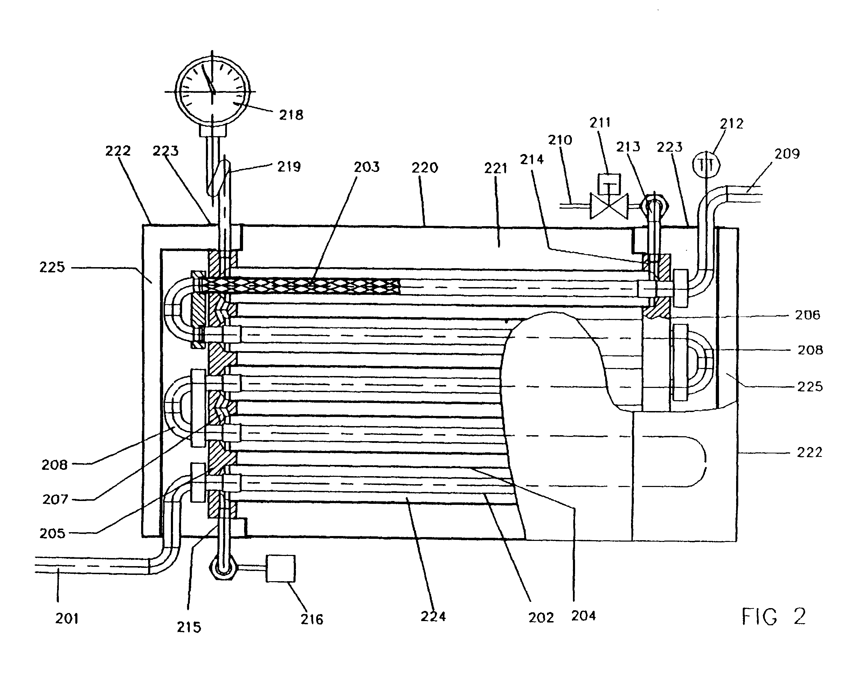

Figure 2 gives a more detailed explanation of the mode of operation of the abovementioned apparatus: the first medium, which is to be treated, is directed to the apparatus via a supply line 201. There it enters the first of five central tubes 202. In these central tubes, Sulzer SMX mixing elements 203 are fitted so as to be detachable. Around each central tube 202 a shell tube 204 is positioned. Within the annular space formed thereby the second medium (such as, for example, steam, thermal oil, water, glycol) can flow. The central and shell tubes, 202 and 204, respectively, are fixed to two end plates 205, 206. The central tubes 202 project through the end plates 205, 206 and are welded so as to be gas-tight. The shell tubes 204 are welded between the end plates 205, 206 so as to be gas-tight. The end plates contain ducts 207, in order to pass the second medium from the one to the other annular space 224. Attached to the outside of the end plates, by means of detachable fastening means, are U-bends 208, via which the medium to be processed is conveyed to the next central tube. After having passed the last central tube, the first medium is conveyed onwards via a discharge line 209. The second medium is supplied via a line 210, this being controlled by a control valve 211. This in turn is controlled by a temperature sensor 212 which is fitted in the discharge line 209 for the first medium. Having passed the control valve 211, the second medium flows, via line 213, to an inlet 214 which is situated in the end plate 206. Having passed all the annular spaces, the second medium leaves the apparatus via connection 215 which is situated in the end plate 205. Then the second medium, if the apparatus is being used as a boiler, using steam as the heat-delivering second medium, is dicharged through a conventional assembly of filter, steam trap and the like, represented by 216. If the apparatus is being used as a cooler, using water, for example, as the heat-absorbing medium, the discharge line, represented by 216, contains a pressurizing valve to ensure that the annular compartment is at all times filled with cooling medium. The pressure prevailing in the annular compartment is read at a manometer 218 which is connected to the apparatus via a U-tube 219. To prevent heat loss a cowling 220 is attached to and between the end plates 205, 206 so as to form a closed housing. The cavity 221 thus created is filled with an insulation material such as perlite. This ensures that, for example in the case of the apparatus being used as a boiler, steam being employed as the heat-delivering second medium, the temperature at the outside of the apparatus does not exceed 45°C. Emission of radiation which may occur at the end of the plates 205, 206 and cooling of the U-bends 208 are limited by covers 222. These covers are similarly constructed in such a way that in this case a cavity 225 is likewise formed which may be filled with perlite. The passages at the underside and top side of these covers are sealed by small cover plates 223.

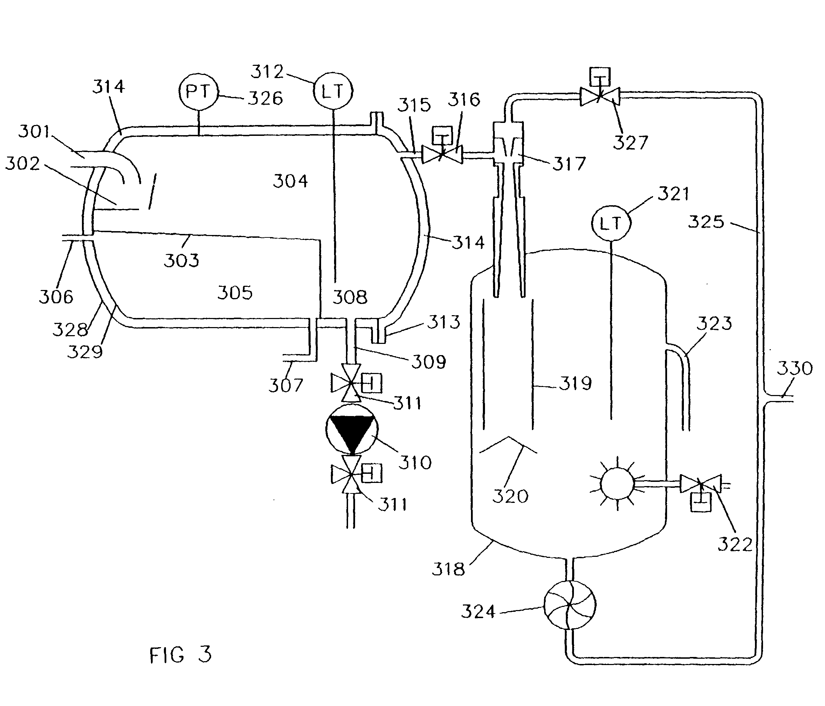

The mode of operation of the evaporator system is explained in more detail with reference to Figure 3. The first medium to be evaporated is supplied via a supply line 301 and in the process passes through an outer and inner wall 328 and 329, respectively, of the underpressure chamber and enters an intercep-tion/spreading tray 302. The spreading tray distributes the medium over the entire width of a plate 303. The prevailing underpressure causes vapour to be liberated in a vapour space 304. To prevent cooling of the medium, the plate 303 is heated on the underside by, for example, steam present in space 305. This steam is supplied via a connection 306, and the condensate is discharged via a connection 307. The evaporated medium is collected in a receiver 308 and thence, via an outlet 309, is passed on to an extraction pump 310. Upstream and downstream of the extraction pump 310 stop valves 311 are positioned for cleaning purposes. To keep the amount of medium discharged constant, the speed of the extraction pump 310 is controlled electronically. The required control signal for the latter is obtained on a level electrode 312. For maintenance/cleaning operations, the underpressure chamber is provided with a removable cover 313. The unit is of double-walled construction to prevent premature condensation of the vapour. Between the double wall 328, 329 an insulation material 314 such as, for example, perlite is in place. The cover 313, likewise of double-walled and insulated design, incorporates a steam outlet 315 which, for cleaning purposes, is provided with a stop valve 316. The steam outlet is connected to a water-jet ejector 317 which creates and maintains the underpressure in the underpressure chamber. To keep the level of the underpressure constant, a pressure sensor 326 is fitted which electronically controls a control valve 327. The vapour is condensed in the water jet, and the heat released in the process is absorbed into the water and is transported onwards to a buffer vessel 318. To dissipate the velocity of the water in this buffer vessel 318, the buffer vessel 318 contains a tube 319 and a dish 320. The level of the amount of water available for circulation is controlled by means of level electrode 321 which, if the water level is low, opens a stop valve 322. Any excess of water is discharged through an overflow 323. The circulation of the water is maintained by a circulation pump 324 which pumps the water via a line 325 to the ejector 317. Optionally, this line 325 incorporates a tap 330 which passes the warmed water to another processing system.

With reference to the following examples, the advantages of the apparatuses and systems according to the present invention will be explained in more detail and compared with apparatuses and systems being used according to the prior art. These examples, however, are by no means intended to limit the scope of the invention.

The tables below give a comparison of the use of an apparatus according to the present invention, comprising a heat exchanger for heating a medium with the aid of steam, an evaporator system, and a second heat exchanger for cooling the medium to be treated, with the aid of water. The first and second column list various process parameters and the associated units, respectively; the third column gives the corresponding data as applicable to the respective conventional apparatuses and systems from the prior art, whereas the fourth column reports the data for the apparatus according to the present invention (new app.). The fifth column shows any differences which may occur between the values of the conventional apparatuses and the apparatus according to the present invention. A possible further column is reserved for necessary comments.

As the tables show, it is possible, in all cases, in the sugar-processing industry (Tables 1 and 2), as well as in the baking industry (Table 3) and the dairy industry (Table 4), to achieve considerable savings in the areas of steam consumption, water consumption and energy. Owing to the simple, compact design involving a reduced length of central compartment compared with existing apparatuses, considerably less cleaning fluid is required; owing to a saving in weight linked to the compact design the apparatus according to the present invention is more easily handled and also provides considerable savings in space compared with known apparatuses. Owing to the residence time of the medium in an apparatus according to the present invention being considerably shorter than in apparatuses which are known from the prior art and are used in the industries in question, the media to be treated are to a far lesser extent subject to any detriment they may suffer during an operation, for example by charring, degeneration etc.

If the apparatus according to the present invention is used for preparing hard caramel on the basis of sugar (Table 1) it affords, in comparison with a conventional apparatus, for example a saving in steam of 56%, whereas 90% less water is consumed in the boiling-down process. The cooling water for the cooler can, in addition to the process water, be reused in its entirety, as decribed hereinabove. As a result of evaporation taking place as described hereinabove by absorption of the vapour into the water which runs through the ejector and is suitable for reuse, there is no emission of this intensely odorous vapour into the atmosphere. In the apparatus according to the present invention it is also possible, in contrast to the situation in the conventional apparatuses, for the caramel solution to be cooled rapidly, so that the preparation of white caramel is possible (see note to Table 1).

**TABLE 1**

| Production of 700 kg/h of hard caramel (sugar-processing industry) On the basis of sugar (sucrose) | | | | | |
|---|---|---|---|---|---|
| | | Conv. app. | New app. | Diff % | Comments |
| Initial capacity | kg/h | 930 | 930 | - | |
| Final capacity | kg/h | 700 | 700 | - | |
| Water to be evaporated | kg/h | 230 | 230 | - | |
| Heat required | kW | 200 | 200 | - | |
| Steam consumption boiler | kg/h | 410 | 178 | -56 | |
| Water consumption for evaporation | kg/h | 2000 | 200 | -90 | |
| Reused process water | kg/h | 0 | 230 | +100 | |
| Cooling water for cooler | kg/h | n/a | 500 | | See NOTE |
| Steam consumption rotary boiler | kg/h | 250 | 250 | 0 | |
| Cleaning fluid | kg/h | 2000 | 1000 | -50 | |
| Emission of product-containing vapour | kg/h | 230 | 0 | -100 | |
| Weight of installation | kg | 4300 | 1800 | -58 | |
| Residence time | sec | 490 | 48 | -90 | Important in connection with charring due to protein-containing product. Also inversion. |
| NOTE: The conventional installations cannot be used to make white caramel, because of charring. In the case of white caramel rapid cooling is necessary to stop the Maillard reaction; for this purpose the third cooler is used. | | | | | |

If, in the abovementioned case, sugar is replaced by a sugar substitute such as, for example, xylitol (Table 2), the apparatus affords savings in steam of 65%, and 85% less water is consumed in the boiling-down process.

**TABLE 2**

| Production of 500 kg/h of hard caramel (sugar-processing industry) On the basis of sugar substitute xylitol | | | | | |
|---|---|---|---|---|---|
| | | Conv. app. | New app. | Diff % | Comments |
| Initial capacity | kg/h | 630 | 630 | - | |
| Final capacity | kg/h | 500 | 500 | - | |
| Water to be evaporated | kg/h | 130 | 130 | - | |
| Heat required | kW | 113 | 113 | - | |
| Steam consumption boiler | kg/h | 275 | 95 | -65 | |
| Water consumption for evaporation | kg/h | 1500 | 225 | -85 | |
| Reused process water | kg/h | 0 | 130 | +100 | |
| Cleaning fluid | kg/h | 2000 | 1000 | -50 | |
| Emission of product-containing vapour | kg/h | 130 | 0 | -100 | |
| Weight of installation | kg | 3500 | 1300 | -63 | |
| Residence time | sec | 310 | 33 | -89 | Important in connection with degeneration and inversion of the product. |

In the course of producing fondant (Table 3) the use of the apparatus according to the present invention likewise affords considerable savings in steam (± 63%) and cooling water (68%), whereas the water used in the evaporation process can be reused in its entirety, just like the process water. Moreover, there is no emission of vapour.

**TABLE 3**

| Production of 450 kg/h of fondant (baking industry) | | | | | |
|---|---|---|---|---|---|
| | | Conv. app. | New app. | Diff % | Comments |
| Initial capacity | kg/h | 512 | 512 | - | |
| Final capacity | kg/h | 450 | 450 | - | |
| Water to be evaporated | kg/h | 62 | 62 | - | |
| Heat required | kW | 56 | 56 | - | |
| Steam consumption boiler | kg/h | 180 | 67 | -62.7 | |
| Water consumption for evaporation | kg/h | 0 | 100 | +100 | Conventional installations expel vapours freely into the atmosphere; no monitoring |
| Reused process water | kg/h | 0 | 62 | +100 | |
| Cooling water consumption for cooler | kg/h | 1250 | 400 | -68 | Conventional installations with cooling wheel |
| Cooling water consumption fondant machine | kg/h | 900 | 500 | -44 | |
| Cleaning fluid | kg/h | 1000 | 750 | -25 | Conventional installations cannot be cleaned by CIP methods |
| Emission of product-containing vapour | kg/h | 62 | 0 | -100 | |
| Weight of installation | kg | 3800 | 1700 | -55 | |
| Residence time | sec | 190 | 26 | -86 | Important in connection with degeneration and inversion of the product |

For the preparation of custard (Table 4) two heat exchangers according to the present invention are connected directly to one another, the first one supplying heat to the product (the first medium) and the second heat exchanger removing heat from the product. Exactly as in the case of producing hard caramel, the use of an apparatus according to the present invention for preparing custard affords considerable savings in terms of steam (71%) and cooling water (80%).

**TABLE 4**

| Production of 1000 kg/h of custard (dairy processing industry) Set-up: boiler followed by cooler. | | | | |
|---|---|---|---|---|
| | | Conv. app. | New app. | Diff % |
| Initial capacity | kg/h | 1000 | 1000 | - |
| Final capacity | kg/h | 1000 | 1000 | - |
| Water to be evaporated | kg/h | 0 | 0 | - |
| Heat required | kW | 181 | 181 | - |
| Steam consump. boiler | kg/h | 558 | 163 | -71 |
| Cooling water consumption cooler | kg/h | 2000 | 400 | -80 |
| Cleaning fluid | kg/h | 3000 | 1500 | -50 |
| Weight of installation | kg | 3000 | 1000 | -67 |
| Residence time | sec | 279 | 32.4 | -88 |

Table 5 shows what characteristics media should advantageously have to be processed effectively in a preferred embodiment of the present invention.

This preferred embodiment serving as an example comprises:
- 3-9 straight central tubes having a total length of 1.35-6.25 m and an internal diameter of 32 mm,
- 2-8 U-bends having an internal diameter of 32 mm,
- mixing elements of the type SULZER SMX, each having a length of 32 mm and a diameter of 32 mm, positioned under tension in each central tube and filling it completely.

It should be noted that the apparatus for exchanging heat can be adapted as required, depending on the field of application and desired capacity, and can be extended or shortened by adding or removing assemblies such as those described hereinabove. Thus the preferred internal diameter in the case of heating is in the range between 25 and 40 mm, and in the case of cooling is in the range between 25 and 50 mm. It goes without saying that the values mentioned in Table 5 can vary correspondingly.

**Table 5**

| Preferred characteristics of media (product) which can be heated or cooled, respectively, in a preferred embodiment of the apparatus according to the present invention having an internal central tube diameter of 32 mm. | | | | | |
|---|---|---|---|---|---|
| | **HEATING** | | **COOLING** | | |
| | minimum value | maximum value | minimum value | maximum value | |
| Tube length | 3.3 | 6.25 | 1.35 | 2.45 | m |
| Production capacity | 285 | 535 | 215 | 395 | kg/h |
| Viscosity of product | 0.3 | 0.36 | 0.85 | 0.92 | Pa.s |
| Specific mass of product | 1418 | 1440 | 1440 | 1480 | kg/m³ |
| Specific heat of product | 1.75 | 1.8 | 1.7 | 1.75 | kJ/kgK |
| Heat conduction coefficient of product | 0.364 | 0.367 | 0.55 | 0.56 | W/mK |
| Flow velocity | 0.09 | 0.17 | 0.055 | 0.1 | m/s |
| Reynolds number | 11.7 | 22.2 | | | |
| Average temperature difference | 32 | 46 | 35 | 58 | °C |
| Steam temperature | 134 | 160 | | | °C |
| Temperature of incoming cooling water | | | 40 | 52 | °C |
| Line resistance | 1.25 | 4.5 | 1.7 | 5.8 | bar |

The scope of the present invention also includes an apparatus, described herein, for exchanging heat, in which the annular compartment is discontinuous as a result of connection 109 having been replaced by an additional inlet and outlet for, respectively, supplying a new second medium and discharging the second medium used upstream of this outlet; such a set-up makes it possible to use two different media, whose temperatures may differ, in separate surrounding compartments. Such a set-up can be regarded as two apparatuses according to the present invention connected in series.

## Claims

1. Apparatus for exchanging heat, in a flow process, between an at least in part liquid first medium to be treated and a liquid or gaseous second medium, comprising a plurality of cooperating assemblies each comprising a central tube (202), provided with one or more static mixing elements (203), an annular space (224) surrounding said tube and a shell tube (204) which delimits the annular surrounding space (224), at least the annular spaces (224) communicating with one another in such a way that an essentially continuous annular compartment is formed and the central tubes (202) likewise being connected to one another in such a way that an essentially continuous central compartment is formed, in which, during operation, the first medium is flowing, the second medium flowing through the annular compartment, **characterized in that** the central tubes (202) are essentially completely filled with the static mixing elements (203), the mixing elements (203) being positioned in such a way in the central compartment that they are in contact with the wall of the central tube (202), the static mixing elements (203) comprise at least partly blade-shaped components contacting the inner wall of a central tube (202) and which slope in the flow direction of the first medium.

2. Apparatus according to claim 1, **characterized in that** the static mixing elements (203) are positioned so as to be detachable.

3. Apparatus according to claim 1 or 2, **characterized in that** the static mixing elements (203) comprise the blade-shaped components in a criss-cross fashion, the blade-shaped components of the mixing elements being disposed in at least two groups and the blade-shaped components within one group being essentially parallel, whereas the blade-shaped components of the one group cross the blade-shaped components of the other group.

4. Apparatus according to any one of the preceding claims, **characterized in that** at least one of the connection means which connect the central tubes to one another is provided with one or more sealable orifices for adding constituents to the first medium.

5. Apparatus according to claims 1-4, **characterized in that** the apparatus is accommodated, at least in part, within a heat-insulating housing (221).

6. Apparatus comprising an apparatus for exchanging heat according to claims 1-5 having the central compartment for the first medium on the downstream side (209) connected to an evaporator system.

7. Apparatus according to claim 6, **characterized in that** the evaporator system includes an underpressure chamber (304) .

8. Apparatus according to claim 7, **characterized in that** the evaporator system includes, in the underpressure chamber, a plate (303) across which the medium can flow.

9. Apparatus according to claim 8, **characterized in that** the plate (303) of the evaporator system is positioned at an angle with respect to the horizontal flow component of the medium.

10. Apparatus according to claims 8-9, **characterized in that** the plate (303) is of corrugated design.

11. Apparatus according to claims 6-10, **characterized in that** the evaporator system includes an ejector (317).

12. Apparatus according to claim 11, **characterized in that** the ejector (317) is a water-jet ejector for evaporating an aqueous first medium.

13. Apparatus according to claims 11-12, **characterized in that** the ejector (317) of the evaporator system is incorporated in a water circulation system.

14. Apparatus according to claim 13, **characterized in that** the evaporator system is connected in such a way to one or more processing systems that the water from the evaporator system can be delivered to said systems.

15. Apparatus according to claims 6-14, **characterized in that** between the apparatus for exchanging heat and the evaporator system one or more systems are connected for carrying out operations on the first medium, such as a system for applying a supplementary heat treatment, mixing, dilution and the like.

16. Apparatus according to claims 6-15, **characterized** **in that** the evaporator system is followed by a supplementary apparatus for exchanging heat.

17. Apparatus according to claim 16, **characterized in that** between the evaporator system and the supplementary apparatus for exchanging heat one or more systems are connected for carrying out operations on the first medium, such as a system for applying a supplementary heat treatment, mixing, dilution and the like.

## Patentansprüche

1. Apparat zum Wärmeaustauschen, in einem Fließvorgang, zwischen einem zu behandelnden wenigstens teilweise flüssigen ersten Medium und einem flüssigen oder gasförmigen zweiten Medium, mit mehreren zusammenwirkenden Aggregaten, wobei jedes ein zentrales Rohr (202), das mit einem oder mehreren statischen Mischelementen) (203) versehen ist, einen ringförmigen Raum (224), der das Rohr umgibt, und ein Mantelrohr (204) aufweist, das den ringförmigen umgebenden Raum (224) begrenzt, wobei wenigstens die ringfärmigen Räume (224) miteinander in der Weise in Verbindung stehen, daß eine im wesentlichen kontinuierliche ringförmige Kammer gebildet wird, und die zentralen Rohre (202) gleichermaßen in der Weise miteinander verbunden sind, daß eine im wesentlichen kontinuierliche zentrale Kammer gebildet wird, in der, im Betrieb, das erste Medium fließt, wobei das zweite Medium durch die ringförmige Kammer fließt, dadurch gekennzeichnet, daß die zentralen Rohre (202) im wesentlichen vollständig mit den statischen Mischelementen (203) gefüllt sind, wobei die Mischelemente (203) in der Weise in der zentralen Kammer positioniert sind, daß sie mit der Wand des zentralen Rohres (202) in Kontakt stehen, und daß die statischen Mischelemente (203) wenigstens teilweise schaufeltörmige Komponenten umfassen, die die Innenwand eines zentralen Rohres (202) berühren und sich in der Fließrichtung des ersten Mediums neigen.

2. Apparat nach Anspruch 1, dadurch gekennzeichnet, daß die statischen Mischelemente (203) derart positioniert sind, daß sie lösbar sind.

3. Apparat nach Anspruch 1 oder 2, dadurch gekennzeichnet, daß die statischen Mischelemente (203) die schaufelförmigen Komponenten auf kreuzförmige Weise aufweisen, wobei die schaufelförmigen Komponenten der Mischelemente in wenigstens zwei Gruppen angeordnet und die schaufelförmigen Komponenten in einer Gruppe im wesentlichen parallel sind, während die schaufelförmigen Komponenten der einen Gruppe die schaufelförmigen Komponenten der anderen Gruppe kreuzen.

4. Apparat nach irgendeinem der vorangehenden Ansprüche, dadurch gekennzeichnet, daß wenigstens eines der Verbindungsmittel, die die zentralen Rohre miteinander verbinden, mit einer oder mehreren abdichtbaren Öffnungen) zum Hinzufügen von Bestandteilen zum ersten Medium versehen ist.

5. Apparat nach den Ansprüchen 1 - 4, dadurch gekennzeichnet, daß der Apparat, zumindest teilweise, in einem wärmeisolierenden Gehäuse (221) untergebracht ist.

6. Apparat mit einem Apparat zum Wärmeaustauschen nach den Ansprüchen 1 - 5, bei dem die zentrale Kammer für das erste Medium auf der stromabwärtigen Seite (209) mit einem Verdampfersystem verbunden ist.

7. Apparat nach Anspruch 6, dadurch gekennzeichnet, daß das Verdampfersystem eine Unterdruckkammer (304) enthält.

8. Apparat nach Anspruch 7, dadurch gekennzeichnet, daß das Verdampfersystem, in der Unterdruckkammer, eine Platte (303) enthält, über die das Medium fließen kann.

9. Apparat nach Anspruch 8, dadurch gekennzeichnet, daß die Platte (303) des Verdampfersystems unter einem Winkel in Bezug auf die horizontale Fließkomponente des Mediums positioniert ist.

10. Apparat nach den Ansprüchen 8 - 9, dadurch gekennzeichnet, daß die Platte (303) wellenförmig gestaltet ist.

11. Apparat nach den Ansprüchen 6 - 10, dadurch gekennzeichnet, daß das Verdampfersystem einen Ejektor (317) enthält.

12. Apparat nach Anspruch 11, dadurch gekennzeichnet, daß der Ejektor (317) ein Wasserstrahlejektor zum Verdampfen eines wässerigen ersten Mediums ist.

13. Apparat nach den Artsprüchen 11- 12, dadurch gekennzeichnet, daß der Ejektor (317) des Verdampfersystems in ein Wasserkreislaufsystem eingebaut ist.

14. Apparat nach Anspruch 13, dadurch gekennzeichnet, daß das Verdampfersystem in der Weise mit einem oder mehreren Behandlungssystem(en) verbunden ist, daß das Wasser von dem Verdampfersystem an die Systeme geliefert werden kann.

15. Apparat nach den Ansprüchen 6 - 14, dadurch gekennzeichnet, daß zwischen dem Apparat zum Wärmeaustauschen und dem Verdampfersystem ein oder mehrere System(e) zum Durchführen von Operationen an dem ersten Medium, wie z. B. ein System zum Anwenden einer zusätzlichen Wärmebehandlung, Mischen, Verdünnen und dergleichen, angeschlossen ist/sind.

16. Apparat nach den Ansprüchen 6 - 15, dadurch gekennzeichnet, daß dem Verdampfersystem ein zusätzlicher Apparat zum Wärmeaustauschen folgt,

17. Apparat nach Anspruch 16, dadurch gekennzeichnet, daß zwischen dem Verdampfersystem und dem zusätzlichen Apparat zum Wärmeaustauschen ein oder mehrere System(e) zum Durchführen von Operationen an dem ersten Medium, wie z.B. ein System zum Anwenden einer zusätzlichen Wärmebehandlung, Mischen, Verdünnen und dergleichen, angeschlossen ist/sind.

## Revendications

1. Appareil pour un échange de chaleur, dans un processus d'écoulement, entre un premier agent à traiter au moins partiellement liquide, et un second agent liquide ou gazeux, comportant plusieurs ensembles qui coopèrent et qui comprennent chacun un tube central (202) pourvu d'un ou plusieurs éléments mélangeurs statiques (203), un espace annulaire (224) entourant ledit tube. et un tube formant gaine (204) qui délimite l'espace annulaire (224), les espaces annulaires (224), au moins, communiquant entre eux de manière à définir un compartiment annulaire essentiellement continu, et les tubes centraux (202) étant reliés entre eux, d'une manière similaire, de manière à définir un compartiment central essentiellement continu dans lequel le premier agent s'écoule, pendant le fonctionnement, tandis que le second agent s'écoule dans le compartiment annulaire, **caractérisé** en ce que les tubes centraux (202) sont pratiquement entièrement remplis avec les éléments mélangeurs statiques (203), lesquels sont positionnés dans le compartiment central de manière à être en contact avec la paroi du tube central (202) et comportent des éléments au moins en partie en forme d'ailettes qui sont en contact avec la paroi intérieure d'un tube central (202) et qui sont inclinées dans le sens de l'écoulement du premier agent.

2. Appareil selon la revendication 1, **caractérisé** en ce que les éléments mélangeurs statiques (203) sont positionnés de manière à être amovibles.

3. Appareil selon la revendication 1. ou 2, **caractérisé** en ce que les éléments en forme d'ailettes des éléments mélangeurs statiques (203) sont entrecroisés, étant précisé qu'ils sont disposés en au moins deux groupes, les éléments en forme d'ailettes d'un groupe étant essentiellement parallèles, et les éléments en forme d'ailettes d'un groupe croisant les éléments en forme d'ailettes de l'autre groupe.

4. Appareil selon l'une quelconque des revendications précédentes, **caractérisé** en ce que l'un au moins des moyens de liaison qui relient entre eux les tubes centraux est pourvu d'un ou plusieurs orifices aptes à être fermés de manière étanche, par lesquels on peut ajouter des composants au premier agent.

5. Appareil selon les revendications 1-4, **caractérisé** en ce qu'il est logé au moins en partie dans un carter calorifuge (221).

6. Appareil comportant un appareil d'échange de chaleur selon les revendications 1-5, dont le compartiment central prévu pour le premier agent est relié, côté aval (209), à un système d'évaporateur.

7. Appareil selon la revendication 6, **caractérisé** en ce que le système d'évaporateur comporte une chambre à dépression (304).

8. Appareil selon la revendication 7, **caractérisé** en ce que le système d'évaporateur comporte, dans la chambre à dépression, un plaque (303) à travers laquelle l'agent peut s'écouler.

9. Appareil selon la revendication 8, **caractérisé** en ce que la plaque (303) du système d'évaporateur est placée suivant un certain angle par rapport à la composante d'écoulement horizontale de l'agent.

10. Appareil selon les revendications 8-9, **caractérisé** en ce que la plaque (303) présente une structure ondulée.

11. Appareil selon les revendications 6-10, **caractérisé** en ce que le systéme d'évaporateur comporte un éjecteur (317).

12. Appareil selon la revendication 11, **caractérisé** en ce que l'éjecteur (317) est un éjecteur à eau destiné à l'évaporation d'un premier agent aqueux.

13. Appareil selon les revendications 11-12, **caractérisé** en ce que l'éjecteur (317) du système d'évaporateur est intégré dans un système de circulation d'eau.

14. Appareil selon la revendication 13, **caractérisé** en ce que le système d'évaporateur est relié à un ou plusieurs systèmes de traitement de telle sorte que l'eau provenant du système d'évaporateur puisse être fournie auxdits systèmes,

15. Appareil selon les revendications 6-14, **caractérisé** en ce qu'un ou plusieurs systèmes sont intercalés entre l'appareil d'échange de chaleur et le système d'évaporateur, pour effectuer des opérations sur le premier agent, comme par exemple un système pour appliquer un traitement thermique supplémentaire, un mélange, une dilution et des opérations similaires.

16. Appareil selon les revendications 6-15, **caractérisé** en ce que le système d'évaporateur est suivi par un appareil supplémentaire d'échange de chaleur.

17. Appareil selon la revendication 16, **caractérisé** en ce qu'un ou plusieurs systèmes sont intercalés entre le système d'évaporateur et l'appareil supplémentaire d'échange de chaleur, pour effectuer des opérations sur le premier agent, comme par exemple un système pour appliquer un traitement thermique supplémentaire, un mélange, une dilution et des opérations similaires.
